# EUROPÄISCHE PATENTANMELDUNG

(11) **EP 1 650 104 A1**
(43) Veröffentlichungstag der Anmeldung: **26.04.2006**
(21) Anmeldenummer: 04024261.2
(22) Anmeldetag: 12.10.2004
(51) Int. Cl.: B62D 5/04

(54) **Lenksystem**

(71) Anmelder: ZF Lenksysteme GmbH, 73527 Schwäbisch Gmünd (DE)
(72) Erfinder: Schmid, Johannes, 73527 Schwäbisch Gmünd (DE)

(57) **Zusammenfassung**

Die Erfindung betrifft ein Lenksystem (1), insbesondere ein steer - by - wire Lenksystem, mit einem Lenkwinkelsteuergerät (2) für einen Lenkwinkelsteller (3) zur Verstellung eines Lenkwinkels (β) eines lenkbaren Rades (4). Eine Überwachuhgseinrichtung (5) vergleicht einen Ist-Wert, der das tatsächliche Moment (Mₘ) des Lenkwinkelstellers (3) oder den Lenkwinkel (β) beschreibt, mit einem Sollwert, der das theoretische Moment des Lenkwinkelstellers (3) oder einen theoretischen Lenkwinkel beschreibt, und erzeugt ein Differenzsignal (Δβ, ΔMₘ).

Übersteigt das Differenzsignal (Δβ, ΔMₘ) eine vorgebbare Größe, Dauer oder Häufigkeit so wird das Differenzsignal (Δβ, ΔMₘ) von einem Steuergerät (6) eines Antriebsmotors (7) des Fahrzeugs herangezogen, um die Fahrgeschwindigkeit des Fahrzeugs herabzusetzen und/oder zu begrenzen. Es wird somit ein Notlaufbetrieb des Lenksystems (1) ermöglicht bei dem der Fahrer des Fahrzeugs nicht durch stark schwankende Momente der Lenkung überrascht und damit überfordert wird.

## Beschreibung

Die Erfindung betrifft ein Lenksystem, insbesondere ein steer - by - wire - Lenksystem nach dem Oberbegriff des Anspruchs 1.

Hilfskraftlenksysteme oder Fremdkraftlenksysteme, wie eine steer - by- wire - Lenkung für Fahrzeuge sind bekannt.

Die DE 198 42 627 A1 beschreibt ein Fremdkraftlenksystem für ein Fahrzeug, wobei in einem Normalbetrieb eine von einem Fahrer des Fahrzeugs betätigte Lenkhandhabe, wie etwa ein Lenkrad, über eine elektrische/elektronische Regelstrecke mit gelenkten Fahrzeugrädern miteinander wirkverbunden sind. Bei Ausfall der elektrischen/elektronischen Regelstrecke wird die Wirkverbindung von Lenkhandhabe und gelenkten Fahrzeugrädern redundant mechanisch und/oder hydraulisch dargestellt. Der Normalbetrieb wird von einem Lenkwinkelsteuergerät, dargestellt, welches einen Lenkwinkelsteller ansteuert, wobei Lenkwinkel-Ist-Werte eines mit den gelenkten Fahrzeugrädern betätigten Lenkwinkel-Istwertgebers und Lenkwinkel-Sollwerte eines mit der Lenkhandhabe betätigten Lenkwinkel-Sollwertgebers verglichen werden.

Es sind zwei Lenkwinkelsteuergeräte vorgesehen, die sich gegenseitig überwachen und einen Komfortnotbetrieb in einer servounterstützten mechanischen und/oder hydraulischen Rückfallebene ermöglichen. Ein Notbetrieb ohne Servounterstützung ist ebenso vorgesehen. Bei einem Übergang des Lenksystems während der Fahrt aus dem Komfortnotbetrieb in den nicht servounterstützten Notbetrieb des Fahrzeugs sind keine technischen Maßnahmen vorgesehen, die die veränderten Momente an der Lenkhandhabe berücksichtigen und die Steuerbarkeit des Fahrzeug verbessern.

Die DE 100 19 152 A1 beschreibt ein System zur Regelung eines, einen elektrischen Stellmotor aufweisenden Stellers insbesondere in einer Kraftfahrzeuglenkung, mit einem Lenkwinkelsteuergerät, das abhängig von einem Vergleich eines aus einem Betriebszustand des Kraftfahrzeugs ermittelten Sollwertes, der einer gewünschten Stellposition entspricht, mit einem Istwert, der der tatsächlichen Stellposition des Stellers entspricht, eine Stellgröße ermittelt und an den Steller abgibt. Das System zur Regelung eines elektrischen Stellmotors umfasst eine Überwachungseinrichtung, die unter Einbezug eines Modells des Stellmotors und eines Modells der Regelstrecke die notwendigen Informationen liefert um die Stellgüte bewerten zu können. Zu diesem Zweck weist die Überwachungseinrichtung einen Lastmomentenschätzer und Modelle für den Stellmotor und für die Regelstrecke sowie eine Fehlerauswerteeinrichtung auf, die abhängig von den, von den Modellen ermittelten theoretischen Werten und von der Lastmomentenschätzung Maßnahmen zur Sicherheit der mit dem Steiler verstellten Gliedern bzw. zur Sicherheit des Fahrzeugs vornimmt. Zu den Sicherheitsmaßnahmen zählen sofortige Abstellung, Übergang in einen von einer mechanischen oder hydraulischen Rückfallebene dargestellten Notlauf, Warnsignalabgabe usw. des elektrischen Systems. Mit den genannten Maßnahmen ist nicht notwendigerweise die Fahrzeugsicherheit eines mit dem System zur Regelung eines elektrischen Stellmotors ausgestatteten Lenksystems verbessert.

Der Erfindung liegt die Aufgabe zugrunde, ein Lenksystem anzugeben, das im Fehlerfall des Lenksystems in der Lage ist, zeitnah in die Fahrdynamik eines Fahrzeugs einzugreifen.

Die Aufgabe wird mit einem Lenksystem mit den Merkmalen des Anspruchs 1 gelöst.

Dadurch dass ein Lenksystem, das als Hilfskraft- oder Fremdkraftlenksystem ausgebildet sein kann, geschaffen ist, das eine Überwachungseinrichtung zum Vergleich eines Ist-Wertes eines Lenkwinkelsteller-Momentes, dargestellt durch die Stromaufnahme des Lenkwinkelstellers, oder eines Lenkwinkels mit einem Sollwert eines theoretischen Lenkwinkelsteller-Momentes oder Lenkwinkels aufweist und Differenzsignale abgibt, wobei die Überwachungseinrichtung bei Überschreiten einer vorgebbaren Größe des Differenzsignals und unter Berücksichtigung der Dynamik des Fahrzeugs über ein Steuergerät eines Antriebsmotors des Fahrzeugs die aktuelle Fahrleistung des Fahrzeugs herabsetzt oder begrenzt, ist eine automatische Maßnahme zur sofortigen Verbesserung der Sicherheit des Fahrzeugs geschaffen. Der Fahrer eines solchermaßen ausgestatteten Fahrzeugs wird bei einem Notlauf des Lenksystems durch stark ändernde Momente an der Lenkhandhabe nicht überfordert, da das Fahrzeug entsprechend zu der Größe des Differenzsignals seine Fahrleistung verringert. Eine adaptiv wirkende Sicherheitsmaßnahme ist damit geschaffen.

Bevorzugte Ausführungen der Erfindung ergeben sich aus den Unteransprüchen.

Ist der Lenkwinkelsteller als elektromotorisch betätigter Steller ausgebildet, so kann die Überwachungseinrichtung den Strom an einer Leistungsendstufe des Stellers überwachen und bei Überschreiten einer vorgebbaren Größe und/oder der Dauer des Differenzsignals von Ist-Strom und theoretischem Soll-Strom kann die Fahrgeschwindigkeit des Fahrzeugs herabgesetzt oder begrenzt werden. Es kann zweckmäßig sein, Einfluß auf die Dynamik des Fahrzeugs zu nehmen oder die Maximalgeschwindigkeit des Fahrzeugs im Fehlerfall des Lenksystems entsprechend proportional zu der Größe und/oder Dauer des relevanten Differenzsignals herabzusetzen. Die tolerierbare Dauer des Auftritts eines relevanten Differenzsignals kann im umgekehrten Verhältnis zu der Größe des Differenzsignals stehen.

Um den Fahrer und die Umgebung des Fahrzeugs über einen etwaigen Fehlerfall des Lenksystems und einen aktuellen Notlauf mit erhöhten Momenten an der Lenkhandhabe zu informieren, kann es zweckmäßig sein, eine Einrichtung zur Erzeugung eines optischen, akustischen oder haptischen Warnsignals an den Fahrer und/oder an die Umgebung des Fahrzeugs in dem Lenksystem vorzusehen.

Das Lenksystem kann als hydraulisches, elektrisches oder elektrohydraulisches Lenksystem mit mechanischer oder hydraulischer Rückfallebene ausgeführt sein. Der Eingriff des Lenkwinkelstellers kann in bekannter Weise an einer Lenkwelle oder an einem Lenkgetriebe erfolgen. Die Verbindung von dem Lenkwinkelsteuergerät, der Überwachungseinrichtung und dem Steuergerät des Antriebsmotors des Fahrzeugs erfolgt bevorzugt mittels eines CAN-Bussystems.

Die Erfindung wird nun näher anhand eines Ausführungsbeispiels und anhand der beiliegenden Zeichnung beschrieben.
- Fig. 1: zeigt ein Blockschaltbild eines Lenksystems,
- Fig. 2: zeigt ein Blockschaltbild eines weiteren Lenksystems,
- Fig. 3: zeigt einen schematischen Kennlinienverlauf einer nichtlinearen Lenkunterstützungskennlinie der Lenksysteme in Fig. 1 und 2.

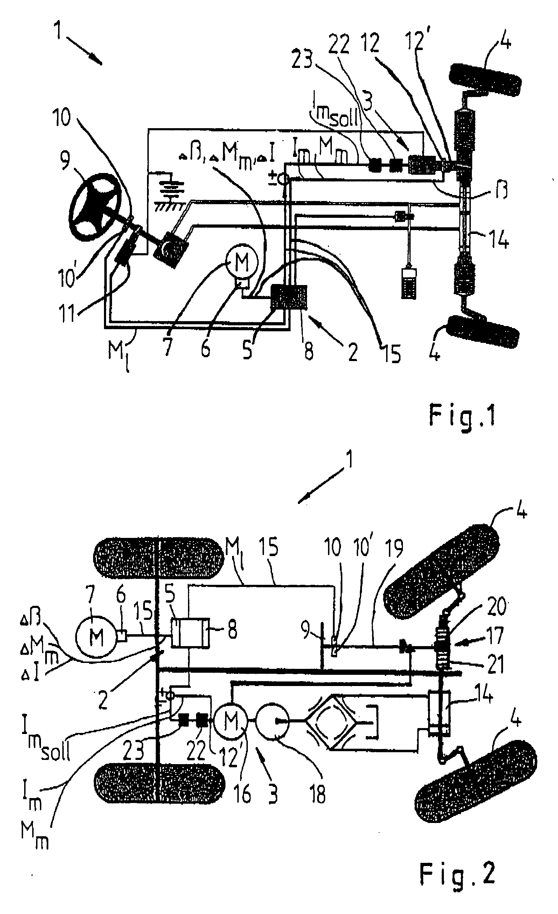

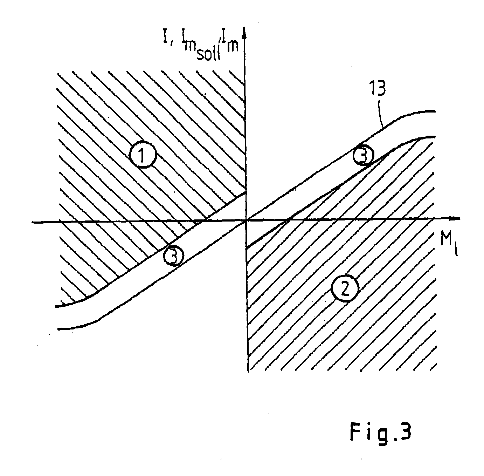

In Figur 1 ist in einem Blockschaltbild ein steer - by - wire Lenksystem 1 eines Fahrzeugs gezeigt. An einer als Lenkrad 9 ausgebildeten Lenkhandhabe werden der eingestellte Lenkwinkel und das aufgebrachte Lenkradmoment Mₗ von Sensoren 10, 10' registriert und einem Lenkwinkelsteuergerät 2 zugeführt. Ein Lenkradmotor 11 an einer Lenksäule des steer - by - wire Lenksystems dient zur Simulation der aktuellen Radkräfte gelenkter Räder 4 des Fahrzeugs. Die lenkbaren Räder 4 werden von einem elektrischen Lenkwinkelsteller 3 über dessen Ritzel und eine Zahnstange 21 bewegt. Sensoren 12, 12' dienen zur Erfassung des tatsächlichen Lenkwinkels ß der lenkbaren Räder 4, des tatsächlichen Momentes Mₘ des Lenkwinkelstellers 3 und eines aktuellen Stroms Iₘ des Motors des Lenkwinkelstellers 3. Das Lenkwinkelsteuergerät 2 mißt gemäß einer in Figur 3 gezeigten nichtlinearen Lenkunterstützungskennlinie 13 in Abhängigkeit von den Eingangssignalen der Sensoren 10,10',12,12' und eines Vergleichs von einem aktuellen Strom Iₘ mit einem Soll-Stromwert Iₘₛₒₗₗ einer Leistungsendstufe 22 des elektrischen Lenkwinkelstellers 3 einen Strom zu. Die Leistungsendstufe 22 wird von einem Stromregler 23 aufgrund der Stromdifferenz zwischen dem von dem Lenkwinkelsteuergerät 2 vorgegebenen Sollstrom Iₘₛₒₗₗ und dem aktuellen Strom Iₘ, der von dem Sensor 12' gemessen wird, angesteuert.

Die Lenkunterstützungskennlinie 13 in Fig. 3, die den Verlauf des Sollstromes Iₘₛₒₗₗ an den Motor des Lenkwinkelstellers 3 in Abhängigkeit von dem Moment Mₗ der als Lenkrad ausgebildeten Lenkhandhabe zeigt, ist in ihrem Verlauf abhängig von Umgebungseinflüssen, wie der Temperatur. Sie ist auch abhängig von der Lenkbeschleunigung.

In Figur 2 ist ein Blockschaltbild eines weiteren, als hydraulisches oder mechanisches Hilfskraftlenksystem ausgebildetes Lenksystem 1 gezeigt. Der Motor 16 des Lenkwinkelstellers 3 (Lenkmoment-Unterstützer) wirkt auf ein Lenkgetriebe 17 oder eine Hydropumpe 18. Das Lenkrad 9 ist drehfest über eine Lenkwelle 19 mit einem an deren anderen Ende angeordneten Ritzel 20 verbunden und wirkt zur Lenkverstellung der lenkbaren Räder 4 auf die Zahnstange 21. An der Lenkwelle 19 sind in bekannter Weise ein als Drehschieberventil ausgebildetes Lenkventil angeordnet, das dem Servozylinder 14 durch die Hydropumpe 18 bereitgestelltes Druckmittel zumisst, um den Lenkwinkel ein oder mehrerer lenkbarer Räder 4 zu verstellen. Für gleiche Bauteile gelten dieselben Bezugszeichen wie in Fig. 1, wobei das Lenkwinkelsteuergerät 2 sinngemäß ein Lenkunterstütungs-Momentensteuergerät ist.

Im Fehlerfall des elektrischen Lenksystems in Fig. 1 ist eine hydraulische Rückfallebene, bestehend aus einer mit dem Lenkrad 9 verbundenen Handpumpe zur Versorgung eines hydrostatischen Servozylinders 14 zur Lenkverstellung der lenkbaren Räder 4 vorgesehen. Im Fehlerfall der Hilfskraftlenksysteme in Figur 2, erfolgt eine Lenkverstellung der gelenkten Räder 4 mechanisch durch das Lenkrad 9 und die Lenkwelle 19 mit dem Zahnstangengetriebe. Der Lenkwinkelsteller 3 kann ausgekuppelt sein. Durch die Betätigung der Handpumpe in Fig.1 oder des Zahnstangengetriebes steigen die von dem Fahrer des Fahrzeugs aufzubringenden Lenkradmomente an. Um den Fahrer durch die Veränderungen des Lenkmomentes, nicht zu überfordern, ist es zweckmäßig, die aktuelle Fahrgeschwindigkeit und/oder die Dynamik des Fahrzeugs zeitverzögert oder unmittelbar herabzusetzen und/oder zu begrenzen.

Zu diesem Zweck ist eine Überwachungseinrichtung 5 bevorzugt in dem Lenkwinkelsteuergerät 2 untergebracht, die einen Fehler in dem Lenksystem 1 detektieren kann. Beispielsweise vergleicht die Überwachungseinrichtung 5 das tatsächliche Moment Mₘ des Lenkwinkelstellers 3 oder den Lenkwinkel β der lenkbaren Räder 4 mit einem Sollwert, der das theoretische Moment des Lenkwinkelstellers 3 oder einen theoretischen Lenkwinkel beschreibt, und erzeugt ein Differenzsignal Δβ, ΔMₘ. Bei Überschreiten einer vorgebbaren Größe und/oder Dauer des Differenzsignals Δβ, ΔMₘ wird von dem Lenkwinkelsteuergerät 2 oder der Überwachungseinrichtung 5 ein Steuergerät 6 eines Antriebsmotors 7 des Fahrzeugs über ein CAN-Bussystem 15 angesteuert und die Fahrgeschwindigkeit des Fahrzeugs sofort oder zeitverzögert in Anhängigkeit von der aktuellen Fahrsituation des Fahrzeugs herabgesetzt und /oder begrenzt.

Die Überwachungseinrichtung 5 kann anstelle oder zusätzlich zu dem Vergleich von theoretischem und tatsächlichem Lenkwinkel der lenkbaren Räder 4 und dem theoretischen und tatsächlichen Moment des Lenkwinkelstellers 3 die Korrelation des aktuellen Stroms Iₘ des elektrischen Lenkwinkelstellers 3 mit einem Moment Mₗ an der Lenkhandhabe überprüfen und ein Differenzsignal ΔIₘ generieren. Beschreibt das Differenzsignal ΔIₘ einen aktuellen Strom Iₘ an die Leistungsendstufe des elektrischen Lenkwinkelstellers 3 der in dem in Fig. 3 gezeigten Kennfeld in einem Toleranzbereich -3- um die Lenkunterstützungskennlinie 13 liegt, so wird das Differenzsignal Δlₘ von dem Steuergerät 6 des Antriebsmotors 7 des Fahrzeugs nicht herangezogen um die Fahrgeschwindigkeit des Fahrzeugs herabzusetzen und/oder zu begrenzen. Der Toleranzbereich -3- um die Lenkunterstützungskennlinie 13 ist abhängig von der Dynamik der Lenkbeschleunigung, der Momentenwelligkeit des Lenkwinkelstellers 3 und von bekannten Umgebungseinflüssen.

Liegt der tatsächlich an die Leistungsendstufe des elektrischen Lenkstellers 3 abgegebene Strom Iₘ jedoch im Kennfeldbereich - 1 - in Figur 3, so liegt eine bedeutenden Abweichung vom theoretischen, durch die Lenkunterstützungskennlinie 13 in Abhängigkeit von dem Moment Mₗ an der Lenkhandhabe vorgeschlagenen Strom Iₘₛₒₗₗ vor und ein entsprechendes Differenzsignal ΔIₘ der Überwachungseinrichtung 5 wird von dem Steuergerät 6 des Antriebsmotors 7 des Fahrzeugs herangezogen um die Fahrgeschwindigkeit des Fahrzeugs herabzusetzen und zu begrenzen. Dasselbe gilt für einen tatsächlichen, von der Überwachungseinrichtung 5 gemessenen Stromwert Iₘ der im Kennfeldbereich -2- in Figur 3 richtungsverkehrt ist.

In Abhängigkeit von der Dauer und/oder der Größe und/oder der Häufigkeit des Differenzsignals Δβ, ΔMₘ, Δlₘ kann es zweckmäßig sein, die Fahrgeschwindigkeit des Fahrzeugs herabzusetzen und/oder zu begrenzen. Nicht nur die aktuelle Fahrgeschwindigkeit des Fahrzeugs lässt sich mit dem erfindungsgemäßen Lenksystem herabsetzen und begrenzen. Es kann auch zweckmäßig sein , die Maximalgeschwindigkeit des Fahrzeugs in Abhängigkeit von der Größe und/oder der Dauer und/oder der Häufigkeit eines relevanten Differenzsignals **Δβ**, ΔMₘ, ΔIₘ zu begrenzen. Etwa bei einem Beschleunigungsvorgang des Fahrzeugs kann bei Vorliegen eines relevanten Differenzsignals **Δ**β, ΔMₘ, ΔIₘ die Beschleunigung des Fahrzeugs herabgesetzt oder unterbrochen werden.

Liegt ein relevantes Differenzsignal **Δβ**, ΔMₘ, ΔIₘ vor, so ist es sinnvoll, einen Warnhinweis an den Fahrer des Fahrzeugs oder an die Umgebung des Fahrzeugs mit Hilfe einer dem Lenksystem zugeordneten Warneinrichtung 8 abzugeben. Der Warnhinweis an die Umgebung des Fahrzeugs ist in einfacher Form durch Ansteuern eines Blinkrelais des Fahrzeugs darstellbar.

## Patentansprüche

1. Lenksystem, insbesondere steer-by-wire Lenksystem eines Fahrzeugs, mit einem Lenkwinkelsteuergerät (2) für einen Lenkwinkelsteller (3) zur Verstellung eines Lenkwinkels (ß) eines lenkbaren Rades (4), und mit einer Überwachungseinrichtung (5) die einen Ist-Wert, der das tatsächliche Moment (Mₘ) des Lenkwinkelstellers (3) oder den Lenkwinkel (ß) beschreibt, mit einem Sollwert, der das theoretische Moment des Lenkwinkelstellers (3) oder einen theoretischen Lenkwinkel beschreibt, vergleicht und ein Differenzsignal (Δβ, ΔMₘ) erzeugt, **dadurch gekennzeichnet, dass** bei Überschreiten einer vorgebbaren Größe des Differenzsignals (Δβ, ΔMₘ) das Differenzsignal (Δβ, ΔMₘ) über ein Steuergerät (6) eines Antriebsmotors (7) des Fahrzeugs herangezogen wird, um die Fahrgeschwindigkeit des Fahrzeugs herabzusetzen und/oder zu begrenzen.

2. Lenksystem nach Anspruch 1, **dadurch gekennzeichnet, dass** die Überwachungseinrichtung (5) einen Ist-Wert, der den tatsächlichen Strom (Iₘ) eines elektrischen Lenkwinkelstellers beschreibt, mit einem theoretischen, von einem Lenkmoment abhängigen Strom des elektrischen Lenkwinkelstellers vergleicht und ein Differenzsignal (ΔIₘ) erzeugt, wobei bei Überschreiten einer vorgebbaren Größe des Differenzsignals (ΔIₘ) das Differenzsignal (ΔIₘ) über das Steuergerät (6) des Antriebsmotors (7) des Fahrzeugs herangezogen wird, um die Fahrgeschwindigkeit des Fahrzeugs herabzusetzen und/oder zu begrenzen.

3. Lenksystem nach einem der Ansprüche 1 oder 2, **dadurch gekennzeichnet, dass** bei Überschreiten einer vorgebbaren Dauer des Differenzsignal (Δβ, ΔMₘ, ΔIₘ) über das Steuergerät (6) des Antriebsmotors (7) des Fahrzeugs das Differenzsignal (Δβ, ΔMₘ, ΔIₘ) herangezogen wird um die Fahrgeschwindigkeit des Fahrzeugs herabzusetzen und/oder zu begrenzen.

4. Lenksystem nach einem der Ansprüche 1 bis 3, **dadurch gekennzeichnet, dass** die Fahrgeschwindigkeit des Fahrzeugs proportional zu der Größe des Differenzsignals (Δβ, ΔMₘ, ΔIₘ) herabgesetzt und/oder begrenzt wird.

5. Lenksystem nach einem der Ansprüche 1 bis 4, **dadurch gekennzeichnet, dass** die Maximalgeschwindigkeit des Fahrzeugs bei Überschreiten einer vorgebbaren Größe des Differenzsignals (Δβ, ΔMₘ, Δlₘ) begrenzt wird.

6. Lenksystem nach einem der Ansprüche 1 bis 5, **dadurch gekennzeichnet, dass** eine aktuelle Beschleunigung des Fahrzeugs bei Überschreiten einer vorgebbaren Größe des Differenzsignals (Δβ, ΔMₘ, Δlₘ) herabgesetzt wird.

7. Lenksystem nach einem der Ansprüche 1 bis 6, **dadurch gekennzeichnet, dass** bei Überschreiten einer vorgebbaren Größe des Differenzsignals (Δβ, ΔMₘ, Δlₘ) von einer Warneinrichtung (8) des Lenksystems (1) ein Warnsignal erzeugt wird.

8. Lenksystem nach Anspruch 7, **dadurch gekennzeichnet, dass** das Warnsignal an die Umgebung des Fahrzeugs gerichtet ist.

9. Lenksystem nach Anspruch 7, **dadurch gekennzeichnet, dass** das Warnsignal an den Fahrer des Fahrzeugs gerichtet ist.

10. Lenksystem nach einem der Ansprüche 1 bis 9, **dadurch gekennzeichnet, dass** das Lenksystem (1) als eine elektrische, elektrohydraulische oder hydraulische Hilfskraftlenkung ausgebildet ist.

11. Lenksystem nach einem der Ansprüche 1 bis 10, **dadurch gekennzeichnet** ,das die Überwachungseinrichtung (5), das Steuergerät (6) des Antriebsmotors (7) des Fahrzeugs, das Lenkwinkelsteuergerät (2) und der Lenkwinkelsteller (3) über ein CAN- Bussystem (15) verbunden sind.
